(19) Europäisches Patentamt
European Patent Office
Office européen des brevets

(11) **EP 1 843 166 B1**

(12) **EUROPÄISCHE PATENTSCHRIFT**

(45) Veröffentlichungstag und Bekanntmachung des Hinweises auf die Patenterteilung:
**08.05.2013  Patentblatt 2013/19**

(21) Anmeldenummer: **07006840.8**

(22) Anmeldetag: **02.04.2007**

(51) Int Cl.:
***G01S 19/07*** *(2010.01)*      ***G01S 19/23*** *(2010.01)*

(54) **Ausbreitungsfehler-Bestimmung**

Determination of propagation errors

Détermination d'erreurs de propagation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.04.2006  DE 102006016281**

(43) Veröffentlichungstag der Anmeldung:
**10.10.2007  Patentblatt 2007/41**

(73) Patentinhaber: **Deutsches Zentrum für Luft- und Raumfahrt e.V.**
**51147 Köln (DE)**

(72) Erfinder:
- **Jakowski, Norbert, Dr.**
  **17235 Neustrelitz (DE)**
- **Hoque, Mohammed Mainul**
  **17235 Neustrelitz (DE)**

(74) Vertreter: **Brunotte, Joachim Wilhelm Eberhard et al**
**Bressel und Partner**
**Patentanwälte**
**Park Kolonnaden**
**Potsdamer Platz 10**
**10785 Berlin (DE)**

(56) Entgegenhaltungen:
- **BASSIRI S ET AL: "Higher-order ionospheric effects on the Global Positioning System observables and means of modeling them" MANUSCRIPTA GEODAETICA, XX, XX, Bd. 18, Nr. 5, 1993, Seiten 280-289, XP009087044 ISSN: 0340-8825**
- **B. W. PARKINSON AND J. J. SPILKER: "Global Positioning System: Theory and Applications, vol. I, pages: 485-515" 1996, AMERICAN INSTITUTE OF AERONAUTICS AND ASTRONAUTICS , WASHINGTON, DC, USA , XP002444558 * Seiten 489-490, Abschnitt "2. Dual Frequency Group Delay" * * Seiten 491-493, Abschnitt "C. Higher-Order Ionospheric Effects" * * Seiten 493-495, Abschnitt "D. Obtaining Absolute Total Electron Content ..." ***
- **BRUNNER F K ET AL: "An improved model for the dual frequency ionospheric correction of GPS observations" MANUSCRIPTA GEODAETICA, XX, XX, Bd. 16, Nr. 3, 1991, Seiten 205-214, XP009087043 ISSN: 0340-8825**
- **FRAILE-ORDONEZ J: "Real-time TEC determination for ionospheric modeling in WADGPS" PROCEEDINGS OF THE INSTITUTE OF NAVIGATION (ION) GPS, XX, XX, Bd. 2, 1995, Seiten 1193-1197, XP002385759**

EP 1 843 166 B1

**Beschreibung**

Die Erfindung betrifft ein Verfahren und eine Anordnung zum Bestimmen eines Fehlers bei der Ausbreitung elektromagnetischer Wellen in einer Atmosphäre, die elektrisch geladene Teilchen aufweist.

Die elektromagnetischen Radiowellen aller satellitengestützten Kommunikations- und/oder Navigationssysteme unterliegen der Wechselwirkung mit dem Plasma der Ionosphäre. Die Wechselwirkung ist dispersiv, d.h. stark frequenzabhängig (proportional $1/f^2$) und bei Schwingungsfrequenzen f mit mehr als 10 GHz praktisch bedeutungslos.

In dem von den GNSS (Global Navigation Satellite System) genutzten L-Band Bereich können die nicht-geradlinigen ionosphärischen Ausbreitungseffekte nicht vernachlässigt werden. Deshalb sind die Kenntnis des aktuellen Zustandes der Ionosphäre und das Ergreifen von Maßnahmen der Fehlerkompensation von Bedeutung.

Grundlage der Positionsbestimmung mit GNSS sind Messungen der Code-und Trägerphase. Die gemessene Phase ist bestimmt durch die Phasenlänge $\int n\,ds$ worin n den ionosphärischen Brechungsindex und s das Strahlenweg-(bzw. Ausbreitungsweg-) element bezeichnet. In der geometrischen Optik wird die Ausbreitung der Radiowelle ferner vom Fermat'schen Prinzip (dem Prinzip der kürzesten Ankunft) bestimmt, sodass der Ausbreitungsweg mit dem Minimum der Phasenlänge zu finden ist. Dies führt bei einem Brechungsindex n ungleich 1 zu einem verlängerten Strahlenweg bzw. Laufzeitfehler gegenüber dem Vergleichsfall der Ausbreitung der Welle im Vakuum. Letztendlich wirkt sich in einem GNSS der Fehler derart aus, dass er die von dem Empfänger der Signale ermittelte Entfernung zwischen dem Satelliten und den Empfänger verfälscht. In dieser Beschreibung wird daher aus Gründen der Einfachheit mehrfach von einem Strahlenweg-Fehler gesprochen, auch wenn der tatsächlich verlängerte Strahlenweg, den die elektromagnetische Wellen auf ihrem Weg von der Strahlenquelle zu dem Empfänger durchlaufen hat, nicht die einzige Fehlerursache ist. Als Fehlerursachen kommen insbesondere eine Krümmung des Strahlenweges und eine Wechselwirkung der Welle mit dem Medium in Frage, das die Welle durchläuft. Die Erfindung ist jedoch nicht auf GNSS beschränkt, auch wenn von einem Strahlenweg-Fehler gesprochen wird.

Für den Brechungsindex gilt ein komplexer nichtlinearer Zusammenhang verschiedener geophysikalischer (Ionisationszustand, Magnetfeld) Parameter und geometrischer (Elevation, Azimut) Parameter. Die erste Näherung des Brechungsindex verursacht Entfernungsfehler in der Größenordnung von bis zu 100 m die in GNSS mittels Zwei-Frequenzmessungen eliminierbar sind. Die entsprechenden Verfahren sind bekannt. Die Fehler höherer Ordnung im Brechungsindex ($\sim 1/f^m$, m> 2) liegen in der Größenordnung von bis zu mehreren Zentimetern.

Es ist bereits vorgeschlagen worden, durch Messung und Auswertung von Signalen, die auf verschiedenen Trägerfrequenzen (Schwingungsfrequenzen) empfangen wurden, den Fehler erster Ordnung (m=2) sowie den durch den gekrümmten Ausbreitungsweg bedingten Fehler zu korrigieren. Es besteht jedoch darüber hinaus Bedarf für eine Reduzierung des Restfehlers zweiter Ordnung (m=3), der bei GNSS z. B. in der Größenordnung von mehreren Zentimetern liegen kann. Die Erfindung ist jedoch nicht auf GNSS beschränkt. Vielmehr kann die Erfindung auch zur Korrektur beispielsweise bei der Fernerkundung mittels Radar, z.B. bei der Korrektur von Faraday-Rotationseffekten beim L-Band Radar Anwendung finden.

Während der Fehler erster Ordnung $d_I^{(1)}$ (m=2) durch eine Linearkombination von Zwei-Frequenz-Phasenmessungen relativ leicht eliminiert werden kann, ist dies bei den Fehlern höherer Ordnung und der Verfügbarkeit von nur zwei Frequenzen wie bei GPS (Global Positioning System) nicht möglich. Das Problem wird deshalb in der Vermessungspraxis bisher ignoriert. Die hieraus resultierenden Fehler bleiben in der Regel unerkannt. Sie äußern sich in nicht eindeutig oder falsch bestimmten Positionen. In längeren Messreihen wie in der Geodäsie üblich, können sich diese Fehler auch zum Teil ausmitteln, sodass sie kaum auffallen.

Bassieri S. et al.: "Higher-order ionospheric effects on the Global Positioning System observables and means of modeling them" Manuscripta Geodaetica, Bd. 18, Nr. 5 1993, Seiten 280-289, XP009087044 ISSN: 0340-8825 beschreibt ionosphärische Effekte höherer Ordnung auf die Beobachtungsgrößen globaler Positionierungssysteme und Mittel der Modellierung. Es wird der Effekt der Ionosphäre auf die GPS-Signale für Bodennutzer abgeschätzt, indem auf Basis eines realistischen Modells der Elektronendichte der Ionosphäre verfahren wird und eine Dipolmoment-Näherung für das magnetische Feld der Erde genutzt wird. Gleichung 21 des Dokuments beschreibt eine Näherung der ionosphärischen Verzögerung zweiter Ordnung. Die Näherung ist abhängig von der magnetischen Breite $\theta_m$.

Fraile-Ordonez J.: "Real-time TEC determination for ionospheric modeling in WADGPS" Proceedings of the institute of Navigation (ION) GPS, Bd. 2, 1995, Seiten 1193-1197, XP002385759 beschreibt einen Algorithmus für die Echtzeit-Berechnung des ionosphärischen Gesamt-Elektroneninhalts (TEC). Die Berechnung basiert auf einem Algorithmus, der auf Zwei-Frequenzen-GPS-Messungen angewendet wird.

Es ist eine Aufgabe der vorliegenden Erfindung, ein Verfahren und eine Anordnung der eingangs genannten Art anzugeben, die eine präzisere Bestimmung des Ausbreitungswegfehlers bzw. eine Bestimmung des Restfehlers ermöglichen. Dabei soll optional auf den Einsatz zusätzlicher Messeinrichtungen und Messstrecken, die beispielsweise mit Hilfe von zusätzlichen Satelliten realisiert werden, verzichtet werden.

Die beigefügten Patentansprüche definieren den Schutzumfang.

Der Erfindung liegt der Gedanke zugrunde, dass der Elektroneninhalt der Atmosphäre, insbesondere der Ionosphäre, zuverlässig und mit geringem gerätetechnischem Aufwand bestimmt werden kann.

Insbesondere können Signale, die auf unterschiedlichen Trägerfrequenzen am Ende ihres Ausbreitungsweges durch die Atmosphäre empfangen wurden und deren Ausbreitungsweg zu bestimmen bzw. zu korrigieren ist, selbst dazu verwendet werden, ein Maß für den Inhalt und/oder die Dichte der elektrisch geladenen Teilchen in der Atmosphäre zu bestimmen. Dieses Ladungsmaß ermöglicht es, den Ausbreitungswegfehler genauer zu bestimmen und optional zu korrigieren.

Ein Vorteil dieser Vorgehensweise besteht darin, dass das Ladungsmaß genau für denjenigen Bereich der Atmosphäre bestimmt wird, auf den es bei der Fehlerbestimmung ankommt. Es ist jedoch auch möglich, das Ladungsmaß durch separate Messungen (in Bezug auf die Atmosphäre) ortsabhängig oder zumindest gebietsabhängig zu bestimmen und für die Fehlerbestimmung zur Verfügung zu stellen. Bei der Ladungsmaß-Bestimmung kann wiederum auf Signale zurückgegriffen werden, die auf verschiedenen Trägerfrequenzen übertragen und empfangen wurden. Als Ladungsmaß wird vorzugsweise der Elektroneninhalt eines von dem jeweiligen Signal durchlaufenen Ausbreitungsweges (oder eines Teils des Weges) verwendet. Der (auf eine einzige räumliche Dimension bezogene, lineare) Elektroneninhalt ist als das Integral der Elektronendichte über den Ausbreitungsweg bzw. über den Teil des Weges definiert. Bei einer lokal wenig veränderlichen Elektronendichte kann auch die Elektronendichte selbst als Ladungsmaß bestimmt und für die Fehlerkorrektur verwendet werden oder es kann ein Mittelwert der Elektronendichte verwendet werden.

Ein weiterer Vorteil liegt darin, dass nicht eine Linearkombination von Signalen zweier oder mehrerer Frequenzen gebildet werden muss, um den Fehler bzw. den Restfehler zu bestimmen. Bei einer solchen Linearkombination wird das Signal/Rauschverhältnis verschlechtert.

Insbesondere wird Folgendes vorgeschlagen: ein Verfahren zum Bestimmen eines Fehlers bei der Ausbreitung elektromagnetischer Wellen in einer Atmosphäre, die elektrisch geladene Teilchen aufweist, wobei

- ein erstes Signal ausgewertet wird, wobei das erste Signal mittels einer ersten elektromagnetischen Welle durch die Atmosphäre übertragen wurde und wobei die erste elektromagnetische Welle eine erste Schwingungsfrequenz aufweist,
- zumindest ein zweites Signal ausgewertet wird, wobei das zweite Signal mittels einer zweiten elektromagnetischen Welle durch die Atmosphäre übertragen wurde und wobei die zweite elektromagnetische Welle eine zweite Schwingungsfrequenz aufweist, die von der ersten Schwingungsfrequenz verschieden ist,
- aus dem ersten Signal und aus dem zweiten Signal ein Maß für einen Inhalt und/oder eine Dichte der elektrisch geladenen Teilchen (Ladungsmaß) ermittelt wird,
- das Ladungsmaß dazu verwendet wird, einen Term eines Ausbreitungsweges einer elektromagnetischen Welle oder einen Term einer dem Ausbreitungsweg äquivalenten Größe (z. B. einer Ausbreitungszeit) zu bestimmen, wobei der Term von der Schwingungsfrequenz abhängt.

Bei dem Ausbreitungsweg, dessen Fehler zu bestimmen ist, kann es sich insbesondere um den Ausbreitungsweg der Signale handeln, die zur Bestimmung des Ladungsmaßes verwendet werden. Im Allgemeinen sind die Endpunkte des Ausbreitungsweges durch den Ort des Senders (z.B. eines Satelliten des GNSS) und durch den Ort des Empfängers definiert.

Die Berücksichtigung der Wegfehler-Effekte höherer Ordnung (darunter werden insbesondere Effekte verstanden, die proportional zu dem Kehrwert höherer Potenzen als der zweiten Potenz der Schwingungsfrequenz sind) führt bei präzisen und eine hohe Zuverlässigkeit erfordernden Anwendungen der satellitengestützten Navigation zu einem Gewinn an Genauigkeit und Effektivität (z.B. kürzere Zeiten der Fehlerbestimmung und Korrektur). Mit den wachsenden Erfordernissen zukünftiger Anwendungen, in immer kürzeren Zeiten mit GNSS zuverlässig und präzise Positionen zu bestimmen (z.B. für die Maschinensteuerung), nimmt die Bedeutung dieses Vorteils zu.

Bei dem Term kann es sich insbesondere um einen Term handeln, der von der dritten Potenz der Schwingungsfrequenz abhängt. Es ist eine der Erfindung zu Grunde liegende Erkenntnis, dass mit dem in dieser Beschreibung beschriebenen Verfahren der Fehlerbestimmung insbesondere der Fehler zweiter Ordnung (m=3) ermittelt werden kann, wobei dieser Fehler im Wesentlichen dadurch entsteht, dass durch Wechselwirkung der elektromagnetische Welle mit dem Medium, durch das die Welle sich ausbreitet, insbesondere durch Wechselwirkung mit dem Plasma der Ionosphäre, eine Laufzeitverlängerung (Verzögerung) gegenüber dem hypothetischen Fall stattfindet, dass die Welle sich durch Vakuum ausbreitet.

Es wird bevorzugt, diesen Term (allgemeiner formuliert: den jeweiligen Term) dazu zu verwenden, ein Ergebnis für den Ausbreitungsweg zu korrigieren, insbesondere den als linear angenommenen Ausbreitungsweg zu korrigieren und/oder eine Korrektur erster Ordnung (proportional zum Kehrwert der zweiten Potenz der Schwingungsfrequenz) zu verbessern.

Gemäß einer bevorzugten Ausführungsform wird die Ausbreitung des Signals, dessen Ausbreitungsweg bestimmt werden soll, durch eine Modellrechnung simuliert und als Ergebnis der Simulation der Ausbreitungswegfehler erhalten. Dies schließt den Fall mit ein, dass der Fehler ein Zwischenergebnis der Simulation ist, und die Simulation eine um den Fehler korrigierte Größe ausgibt. Insbesondere können so Fehler höherer Ordnung unter Berücksichtigung der lokalen, regionalen und/oder globalen Gegebenheiten mit hinreichender Genauigkeit (z.B. Restfehler < 2 mm für regionale Anwendungen) näherungsweise bestimmt (geschätzt) werden. die Simulation hat den Vorteil, dass sie in der Praxis, beispielsweise der Praxis bei der Ortsbestimmung mittels eines GNSS, auf einfache Weise angewendet werden kann. Insbesondere können Koeffizienten des Modells definiert werden, für die abhängig von den jeweiligen konkreten Bedingungen der Signal-Ausbreitung Zahlenwerte ermittelt und den Benutzern zur Verfügung gestellt werden können.

Das Ladungsmaß, das eine Information über den aktuellen Ionisationszustand der Atmosphäre, insbesondere der Ionosphäre ist, kann insbesondere auf eine der folgenden Arten bestimmt werden:

- Am Ort des Nutzers (d.h. beispielsweise automatisch während eines Betriebes eines GNSS-Signafempfängers zur Bestimmung einer globalen Position) selbst. Dem liegt der Gedanke zugrunde, dass der Nutzer, der GNSS-Signale auf zwei Trägerfrequenzen empfängt, prinzipiell selbst in der Lage ist, die Information über den Ionisationszustand zu gewinnen.

- An einem von dem Benutzer bzw. Empfänger entfernten Ort, beispielsweise durch einen Ionosphären-Datenservice, der die erforderliche Ionosphäreninformation bereitstellt.

- An einem von den Benutzer bzw. Empfänger entfernten Ort kann optional außerdem auch der Fehler bestimmt werden und/oder die Korrektur des Fehlers durchgeführt werden, z. B. durch einen Ionosphären-GNSS-Datenservice. An dem entfernten Ort können die Informationen bereits dem konkreten Ausbreitungsweg der Welle zugeordnet werden, deren Fehler bestimmt werden soll.

Allgemeiner formuliert werden das Ladungsmaß und/oder eine Information über ein Magnetfeld, das die Ausbreitung des ersten und/oder zweiten Signals beeinflusst, als Eingangsgröße der Modellrechnung verwendet. Die Berücksichtigung des Magnetfeldes dient der Bestimmung des durch den magnetoionischen Term verursachten Fehlers und dessen Modellierung im Korrekturalgorithmus. Dabei bestehen insbesondere die folgenden Möglichkeiten:

- Die Eingangsgröße oder zumindest ein Teil der Eingangsgrößen der Simulation wird/werden von einer Einrichtung am Ort eines Empfängers ermittelt, wobei der Empfänger die elektromagnetische Welle empfängt, für die der Ausbreitungsfehler bestimmt werden soll.

- Die Eingangsgröße oder zumindest ein Teil der Eingangsgrößen wird/werden an einem Ort ermittelt, der von dem Ort eines Empfängers, der die elektromagnetische Welle empfängt, entfernt ist.

- Auch die Bestimmung des Terms und optional die Korrektur des Ausbreitungswegfehlers erfolgt an einem Ort, der von dem Ort eines Empfängers, der die elektromagnetische Welle empfängt, entfernt ist.

Die Eingangsgröße oder die Eingangsgrößen kann/können beispielsweise über Funk (z. B. ein Mobiltelefonnetz) oder über ein Datentransfernetz (z. B. das Internet) zu dem Ort des Empfängers übertragen werden. Insbesondere wird für die Bestimmung des Fehlers ein vollständig auf Überlegungen der Physik der Strahlungsausbreitung beruhender Ansatz verfolgt, der vorzugsweise Informationen über das Magnetfeld und über den aktuellen Zustand der Atmosphäre berücksichtigt. Beispielsweise durch die oben beschriebenen Modellrechnungen, die computergestützt ausgeführt werden können, kann die Fehlerbestimmung und -korrektur in einen (mit Ausnahme der Korrektur von Fehlern höherer Ordnung an sich bekannten) Datenverarbeitungsprozess bei der Positionsbestimmung in GNSS integriert werden. Das gesamte Verfahren der Fehlerbestimmung und/oder -korrektur läuft vorzugsweise automatisch ab. Eine bevorzugte Anwendung betrifft die so genannten RTK (Real Time Kinematik) -Verfahren in den Referenznetzen für GNSS. Die Referenznetze stellen eine Anzahl von GNSS-Empfangsstationen zur Verfügung, die anderen Benutzern des GNSS in der näheren Umgebung der jeweiligen Station Informationen liefern, die die an sich selbstständige Positionsbestimmung (z. B. durch einen konventionellen, einfachen GPS-Empfänger) der andere Benutzer verbessert.

Das Verfahren kann verschiedene Teilschritte aufweisen, die in Modulen einer Anordnung zur Ausführung des Verfahrens implementiert sind. Die Module sind entsprechend dem Verfahrensablauf miteinander verbunden. Bei der Anordnung handelt es sich z. B. um eine Datenverarbeitungseinrichtung, die optional am Ort des Signalempfängers positioniert ist und mit diesem verbunden ist.

Insbesondere kann die oben beschriebene Modellrechnung durch ein eigenes Modul "Simulation" realisiert sein und liefert z. B. eine semiempirische Datenbasis für die nachfolgende Bestimmung von Koeffizienten (d.h. Eingangsgrößen) des Modells. Eine von diesem Modul gelieferte Korrekturvorschrift zur Korrektur des Fehlers kann z. B.

je nach Erfordernis für lokale, regionale oder globale GNSS-Anwendungen geliefert werden.

Anwendungen werden prinzipiell im Bereich satellitengestützte Fernerkundung /Navigation gesehen.

Ausführungsbeispiele der Erfindung werden nun unter Bezugnahme auf die beigefügte Zeichnung beschrieben. Die einzelnen Figuren der Zeichnung zeigen:

Figur 1            ein Flussdiagramm zur Veranschaulichung eines besonders bevorzugten Ausführungsbeispiels des erfindungsgemäßen Verfahrens,

Figur 2            eine Anordnung in einem GNSS zur Positionsbestimmung und zur Fehlerkorrektur,

Figur 3            ein Bild zur Veranschaulichung des Effekts des Erdmagnetfelds auf die Ausbreitung magnetischer Wellen,

Figur 4            ein Diagramm zur Veranschaulichung der Richtungsabhängigkeit des Magnetfeldeinflusses für einen ausgewählten Standort auf der Erdoberfläche,

Figur 5 bis Figur 8  Darstellungen von Restfehlern und zwar absoluten Restfehlern für einen Referenzort und relativen Restfehlern von anderen Orten in Bezug auf den Referenzort,

Figur 9            eine spezielle Ausgestaltung der in Fig. 2 dargestellten Anordnung.

Das im Folgenden beschriebene bevorzugte Ausführungsbeispiel betrifft ein auf physikalischen Überlegungen beruhendes, durch numerische Datenverarbeitungsprozesse realisiertes Verfahren zur Bestimmung von Ausbreitungsfehlern höherer Ordnung. Das Beispiel betrifft insbesondere die Nutzung zur präzisen Positionsbestimmung in GNSS Referenznetzen.

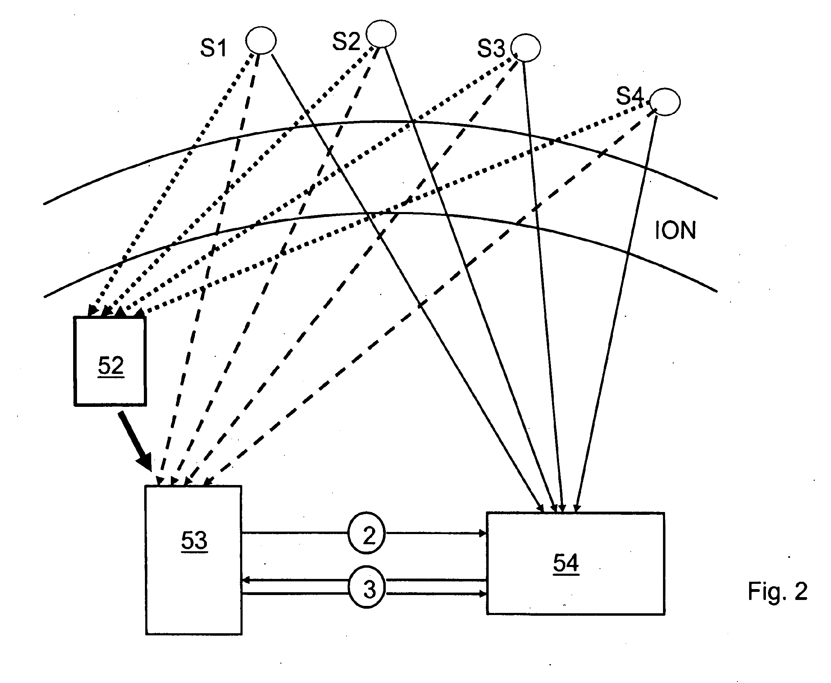

Zunächst soll an dieser Stelle auf die physikalischen Grundlagen eingegangen werden, auf denen das bevorzugte Ausführungsbeispiel beruht. Unter Bezugnahme auf Figur 2 wird zunächst eine Anordnung zum Bestimmen eines Ausbreitungsfehlers beschrieben. In der Figur sind mehrere Satelliten S1 .. S4 eines globalen Satellitennavigationssystems dargestellt. Die von den Satelliten S1 ... S4 gesendeten Signale können sowohl von einem oder mehreren Nutzern 54, von einem ionosphärischen Datenservice (d.h. einer Serviceeinrichtung für die Bereitstellung von Daten über die Ionosphäre) 53 und weiteren GNSS-Stationen 52 empfangen werden. Unter dem "Nutzer 54" wird insbesondere eine unmittelbar für den Anwender zur Verfügung stehende Nutzereinrichtung verstanden, z. B. ein GNSS-Empfänger mit Auswertungseinrichtung zur Auswertung der GNSS-Signale und zur Positionsbestimmung des Nutzers.

Der Nutzer benötigt für eine Positionsbestimmung vier Signale (drei Raum-und eine Zeitkoordinate). Diese Signale sind mit von der Ionosphäre ION verursachten Fehlern behaftet, da sie die Ionosphäre ION durchqueren, deren Grenzen in Fig. 2 durch zwei gekrümmte Linien dargestellt sind. Über eine Zweifrequenzmessung, d. h. einer Auswertung von Signalen, die den gleichen Strahlenweg auf zwei verschiedenen Trägerfrequenzen durchlaufen haben, kann der Fehler erster Ordnung (insbesondere jeweils separat für die von einem der Satelliten empfangenen Signale) für alle vier Beobachtungsgleichungen eliminiert werden. Die verbleibenden Restfehler höherer Ordnung können nun über Korrekturalgorithmen, wie hier vorgeschlagen, eliminiert werden. Es bestehen insbesondere folgende Möglichkeiten:

1. Der Nutzer leitet aus seinen eigenen Zwei-Frequenzmessungen (jeweils separat für die Ausbreitungswege: S1-54, S2 -54, S3-54, S4-54) die gewünschte Information über die Ionosphäre (TEC) ab und korrigiert dann mit Hilfe des Korrekturalgorithmus.

2. Der Nutzer erhält die Ionosphäreninformation von dem externen Ionosphären-Datenservice 53, der über eigene Bodenstationen verfügen kann und/oder die erforderlichen Daten von anderen Messstationen 52 bezieht, zu denen natürlich auch der Nutzer gehören kann. Wichtig ist, dass die ableitbare Ionosphäreninformation aus dem gleichen Gebiet stammt wie sie der Nutzer benötigt. Diese Ionosphäreninformation (z.B. TEC- Karte, d.h. eine Karte der Ionosphäre mit der Angabe des TEC in Abhängigkeit vom Ort bzw. Gebiet der Ionosphäre) kann der Nutzer für die eigene (selbst durchgeführte) Korrektur seiner Messungen verwenden. Die erhaltenen TEC-Werte entsprechen nicht exakt den auf den Strahlenwegen des Nutzers messbaren TEC-Werten. Entsprechend dem Stand der Technik sind über einem bestimmten Gebiet mit entwickelter Infrastruktur (z.B. Europa, USA, Japan) aber hinreichend gute TEC-Karten produzierbar, so dass die durch die TEC-Fehler erzeugten Entfernungsfehler zweiter Ordnung unter 1 mm bleiben können.

3. Der Nutzer macht dem Ionosphären-Datenservice die eigenen Messungen verfügbar und erhält die strahlenwegbezogenen Korrekturen zurück. Diese Korrekturen vermeiden die in Fall 2 geschilderte TEC- Approximation, da die Korrekturen jetzt strahlenwegbezogen durchgeführt werden.

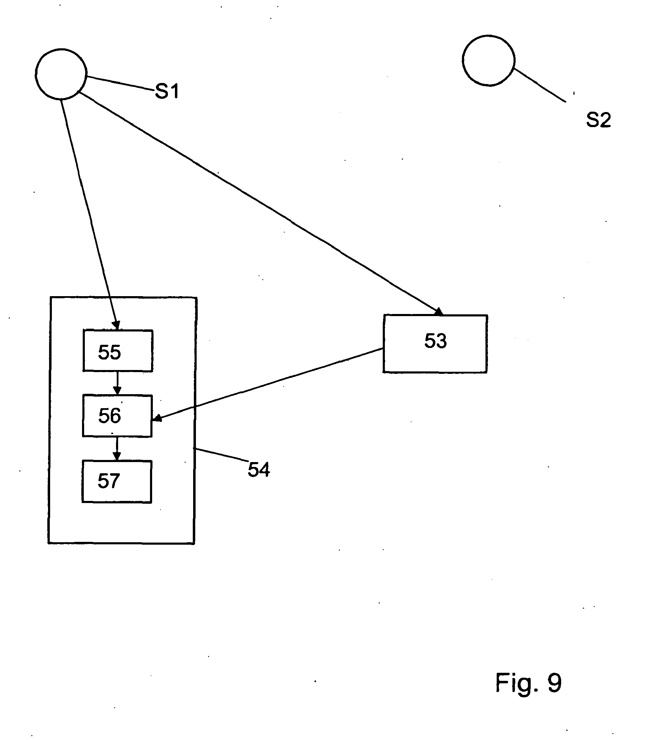

Im Folgenden wird außerdem auf die spezielle Ausgestaltung der Anordnung gemäß Fig. 2 Bezug genommen, die in Fig. 9 dargestellt ist. Gleiche Bezugszeichen bedeuten dabei gleiche Elemente. Die Einrichtung 53 kann in Fig. 9 z. B. eine Einrichtung eines Referenznetzes sein, kann die Signale z. B. des Satelliten S1 auswerten und insbesondere durch das später noch zu beschreibende Verfahren der Zweifrequenz-Auswertung den Elektroneninhalt TEC für das Gebiet der Ionosphäre ION ermitteln, das auf dem Strahlenweg der Signale z. B. von S1 zu der Einrichtung 53 liegt. Die Einrichtung 53 kann diese Information oder sogar Korrekturinformationen, die aus dem TEC abgeleitet sind, an eine Positionsbestimmungseinrichtung des Nutzers 54 übermitteln, z. B. über ein Datenübertragungsnetz oder über eine Funkverbindung.

Die Positionsbestimmungseinrichtung weist z. B. eine Auswertungseinrichtung 55 auf, die das Signal von Satellit S1 empfängt und z. B. in der üblichen Weise zur weiteren Auswertung und zur Bestimmung der Position aufbereitet.

Die Auswertungseinrichtung 55 kann auch dazu ausgestaltet sein, Signale auf zwei oder mehr verschiedenen Frequenzen von dem Satelliten 51 zu empfangen und für die weitere Datenverarbeitung aufzubereiten. Insbesondere kann es sich bei der Auswertungseinrichtung um einen Empfänger zum Empfangen der Signale und um eine damit verbundene Abtastvorrichtung zur Abtastung und Digitalisierung der Signale handeln.

Die Auswertungseinrichtung 55 ist mit einer Ermittlungseinrichtung 56 zur Ermittlung eines Maßes für einen Inhalt und/oder eine Dichte der elektrisch geladenen Teilchen in der Ionosphäre verbunden. Diese Einrichtung 56 kann jedoch entfallen, wenn wie bereits zuvor beschrieben, die entsprechende Information von außerhalb der Positionsbestimmungseinrichtung zur Verfügung gestellt wird. In diesem Fall kann die Einrichtung 56 beispielsweise lediglich für die Einkopplung der Information über das Ladungsmaß in die Verarbeitung der von der Auswertungseinrichtung 55 bereitgestellten Signalinformationen stehen.

Ferner weist die Positionsbestimmungseinrichtung 53 eine Fehler-Bestimmungseinrichtung 57 auf, die ausgestaltet ist, unter Verwendung des Ladungsmaßes einen Term zweiter Ordnung zur Korrektur des Ausbreitungswegfehlers zu berechnen und eine entsprechende Korrektur vorzunehmen. Die Einrichtung 57 kann auch ausgestaltet sein, nach der Fehlerkorrektur die Position der Einrichtung 53 zu bestimmen. Dabei werden z. B. Signale von weiteren Satelliten des GNSS in entsprechender Weise wie die Signale des Satelliten 51 ausgewertet und berücksichtigt.

Der Brechungsindex n der Erd-Ionosphäre ist eine komplexe Funktion, die näherungsweise beschrieben werden kann durch folgende Gleichung:

$$n = 1 - \frac{f_p^2}{2f^2} \pm \frac{f_p^2 \cdot f_g}{2f^3} \cos\Theta - \frac{f_p^4}{8f^4} \qquad \text{(Gl. 1)}$$

Hierin bedeuten: $f_p$ die Plasmafrequenz in dem betrachteten Bereich der Ionosphäre, $f_g$ die Gyrofrequenz, ein Maß für die Wechselwirkung zwischen dem örtlichen Erdmagnetfeld und den freien Elektronen in der Ionosphäre ist, $\Theta$ der Winkel zwischen Strahlenweg (Ausbreitungsweg) und geomagnetischem Feld. Die Dipolstruktur des Erdmagnetfeldes führt zu einer Anisotropie der Brechungseigenschaften der Ionosphäre und zu einer Doppelbrechung ($\pm$ Zeichen vor dem magnetoionischen Term in Gl. 1). In der Vermessungspraxis werden daher üblicherweise nur die ersten beiden Terme in Gl. 1 berücksichtigt.

Der hieraus resultierende Entfernungsfehler erster Ordnung $d_I^{(1)}$ lässt sich darstellen durch:

$$d_I^{(1)} = \frac{K}{f^2} \int N_e ds \qquad \text{(Gl. 2)}$$

worin die Konstante $K = 40{,}3 \ m^3 s^{-2}$, $N_e$ die Elektronendichte der Ionosphäre und ds das Strahlenwegelement bezeichnen. Das Integral in Gl. 2 wird als Gesamtelektronenzahl oder englisch: Total Electron Content (TEC) bezeichnet:

$$TEC = \int N_e ds \qquad \text{(Gl. 3)}$$

Unter den Bedingungen hoher ionosphärischer Ionisation (z.B. in niederen geografischen Breiten und/oder bei hoher Sonnenaktivität) kann der resultierende Entfernungsfehler $d_I^{(1)}$ bis zu 100 m betragen. Die nachfolgenden Terme höherer Ordnung einschließlich der Strahlenwegkrümmung liefern einen Fehler in der Größenordnung von 0,1 % des Fehlers erster Ordnung $d_I^{(1)}$. In präzisen Anwendungen (z. B. bei der cm-genauen Positionsbestimmung in einem GNSS) ist eine Abschätzung dieses Restfehlers und seine nachfolgende Korrektur deshalb erforderlich.

Das folgende Ausführungsbeispiel der Erfindung betrifft ein Verfahren zur effektiven Abschätzung des Restfehlers höherer Ordnung und bietet optional die Möglichkeit seiner Korrektur in operationellen GNSS- Anwendungen. Insbesondere können die für die Ermittlung des Restfehlers erforderlichen Informationen, zum Beispiel der TEC, und/ oder die Korrektur selbst von einer oder mehreren Einrichtungen eines Referenznetzes ermittelt bzw. durchgeführt werden. Die GNSS- Nutzer werden so in die Lage versetzt, eine hohe operationelle Genauigkeit der Positionsbestimmung zu erreichen. Mit Einführung der Korrekturen höherer Ordnung, d.h. mit der Reduzierung der Messunsicherheiten sind zuverlässige und schnellere Lösungen der Positionierungsalgorithmen möglich. Das heißt, dass die Anwender dieser Korrekturen einen kommerziellen Vorteil gegenüber denjenigen besitzen, die nach wie vor Ausbreitungsfehler höherer Ordnung ignorieren.

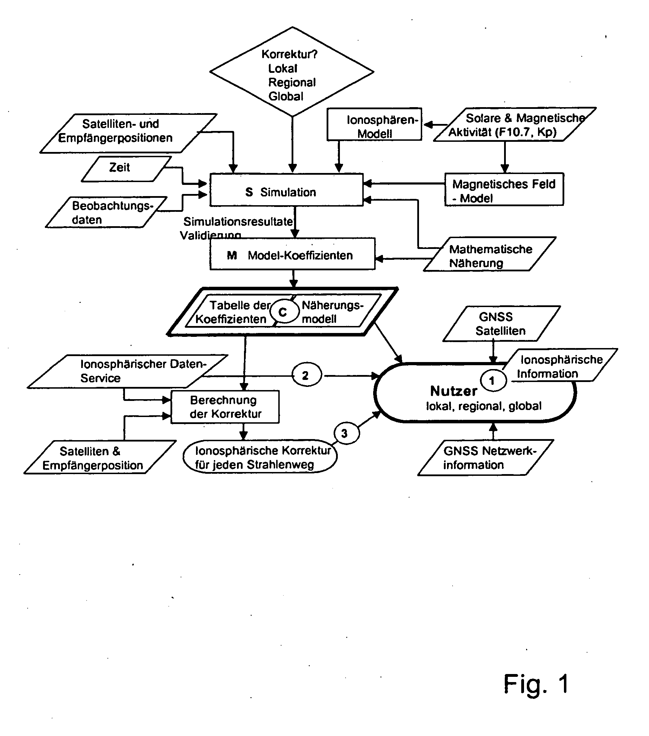

Unter Bezugnahme auf Fig. 1 wird das Verfahren nun beschrieben. Die Beschreibung geht davon aus, dass einzelne Verfahrensschritte in Form von separaten Modulen implementiert sind.

Das Modul S "Simulation" liefert eine semiempirische Datenbasis für eine nachfolgende Bestimmung von Modellkoeffizienten eines Simulationsmodells in Modul M "Modell-Koeffizienten". Die Simulation gründet sich auf ein möglichst realistisches Szenario der Ausbreitung von Radiowellen durch die Ionosphäre. Hierzu wird das ionosphärische Plasma über geeignete ionosphärische Modelle (z.B. mit Hilfe von Chapman-Profilen, wie in der folgenden Veröffentlichung angegeben: Davies, K., "Ionospheric Radio" Peter Peregrinus Ltd., London, UK, 1990) beschrieben. Optional können Messdaten der Ionosphäre, insbesondere aktuelle Messdaten in das Modell einfließen. Diese Daten enthalten insbesondere Informationen über die Elektronendichteverteilung entlang der simulierten Strahlenwege oder zumindest die Gesamtelektronenzahl TEC. Sie können (unabhängig davon, ob Sie aktuell gemessen wurden oder nicht) in einer Datenbank abgelegt sein. Die aktuellen Messdaten können ferner auch alternativ zum Ionosphärenmodell genutzt werden.

Zur Beschreibung des in dem Ausbreitungsgebiet der elektromagnetischen Wellen vorhandenen Magnetfeldes (hier das Erd-Magnetfeld) kann ein hinreichend gutes Modell verwendet werden (z. B. das International Geomagnetic Reference Field - IGRF, wie in der folgenden Veröffentlichung angegeben:, Mandea M., Macmillan S., "International Geomagnetic Reference Field-the eighth generation", Earth Planets Space, Vol. 52, pp. 1119-1124, 2000)

In Fig. 1 sind eine Anzahl von möglichen Eingangsgrößen und/oder Eingangsinformationen für das Modul S dargestellt, nämlich Beobachtungsdaten (Messdaten), die Zeit der Simulation, Informationen über Satelliten- und Signalempfänger-Positionen, die Information, ob die Korrektur des Ausbreitungswegfehlers lokal (d. h. in einem kleinen Gebiet), regional (d. h. für ein größeres Gebiet) oder global (d.h. für den gesamten Planeten) gültig sein soll, ein Modell der Ionosphäre, ein Modell des magnetischen Feldes und Informationen über eine mathematische Näherung bei der Simulation und/oder bei der folgenden Bestimmung von Modell-Koeffizienten.

In Modul M werden Koeffizienten (oder allgemeiner formuliert: Eingangsgrößen) eines vorher entwickelten Korrekturalgorithmus zur Korrektur des bestimmten Fehlers, z.B. mit der Methode der kleinsten Fehlerquadrate an die Simulationsdaten und/oder Messdaten aus Modul S angepasst. Je besser der physikalische Ansatz ist, desto weniger Koeffizienten sind erforderlich. Mit dem Korrekturalgorithmus erhält man realitätsnahe Korrekturen, wobei die natürliche Variabilität des ionosphärischen Zustandes als Funktion einer Reihe geophysikalischer Faktoren wie z.B. Tages- und Jahreszeit, geografisch-geomagnetische Breite, solare und geomagnetische Aktivität im Vorfeld der Simulation und Anpassung zu berücksichtigen ist.

Das auf Modul M folgende Modul C hat die Funktion, für die geeignete, d.h. Nutzer-adäquate Bereitstellung des Korrekturalgorithmus (KA) einschließlich seiner Modellkoeffizienten zu sorgen. Der KA kann bestimmten Anforderungen entsprechend zertifiziert sein, d.h. einer Qualitätskontrolle bzw. Validierung unterzogen worden sein, damit er für bestimmte Anwendungen eingesetzt werden darf. Eine separate Institution kann als Datenservice den KA an einzelne Nutzer oder Nutzergruppen übermitteln bzw. bereitstellen.

Prinzipiell soll die Bereitstellung der Korrekturinformation für operationelle GNSS-Nutzer automatisch erfolgen.

In einem ersten Fall (in Fig. 1 durch eine "1" in einem Kreis dargestellt) erhält z. B. der GNSS-Anwender ausschließlich die von Modul C gelieferten Ausgangsdaten, d.h. z. B. den KA und die Tabelle der Modellkoeffizienten. Die für die Durchführung der Korrektur notwendige Information über den Zustand der Ionosphäre (Ionsphärische Information) kann der Anwender selbst erzeugen oder er greift auf Näherungsmodelle zurück. GNSS- Nutzer sind auf Grund des Empfangs von Zwei-Frequenz-Signalen prinzipiell in der Lage, die erforderliche Ionosphäreninformation selbst abzuleiten.

In einem zweiten Fall (in Fig. 1 und Fig. 2 durch eine "2" in einem Kreis dargestellt) erhält z. B. der GNSS-Anwender neben den Ausgangsdaten von Modulen C auch die erforderliche Ionosphäreninformation von einem externen Dienstleister. Damit ist der GNSS-Anwender in der Lage, die für ihn relevanten Korrekturen selbst zu rechnen und in geeigneter Weise in die Positionsalgorithmen einzubauen.

In einem dritten Fall (in Fig. 1 und Fig. 2 durch eine "3" in einem Kreis dargestellt) erhält z. B. der GNSS-Anwender die vollständige, auf den Strahlenweg der empfangenen Signale bezogene ionosphärische Laufzeitfehlerkorrektur bzw. Ausbreitungsweg-Fehlerkorrektur höherer Ordnung von einer separaten Institution, die alle notwendigen Informationen beschaffen muss. Der GNSS-Anwender braucht keine eigenen Berechnungen durchzuführen, er muss aber auf die richtige Zuordnung der Korrekturinformation in den Positionsalgorithmen achten.

Im Folgenden wird ein Beispiel für die Erstellung eines Algorithmus' zur Korrektur von Fehlern 2. Ordnung für die Ausbreitung von Radiowellen durch die Ionosphäre beschrieben.

Zur Ermittlung dieses Fehlers 2. Ordnung $d_I^{(2)}$ wird der magnetoionische Term (der 3. Term rechts des Gleichheitszeichens) in Gl. 1 verwendet:

$$d_I^{(2)} = \pm \int \frac{f_p^2 \cdot f_g}{2f^3} \cos \Theta \cdot ds \qquad \text{(Gl. 4)}$$

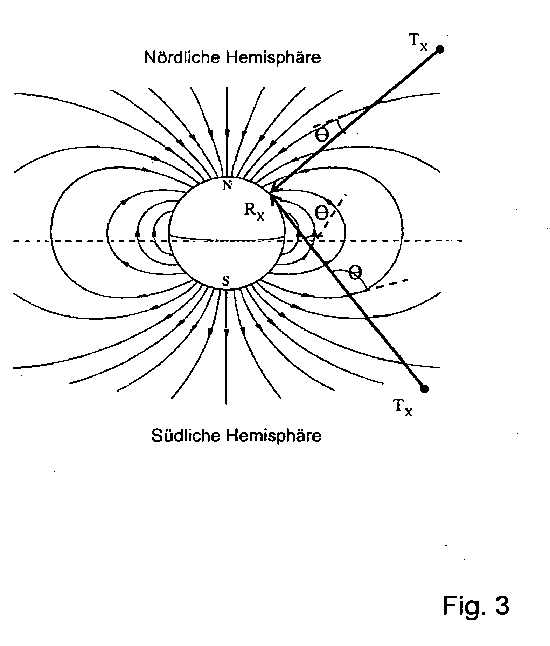

Während die Gyrofrequenz $f_g$ der Elektronen den Betrag der magnetischen Induktion B des Magnetfeldes enthält, spielt auch der Winkel zwischen Strahlenweg und Magnetfeld eine wichtige Rolle bei der Abschätzung des Fehlers. Wie Fig. 3 zeigt, kann der Winkel $\Theta$ auf einem bestimmten Strahlenweg starken Variationen unterliegen. Im Mittelpunkt der Fig. 3 ist die Erdkugel dargestellt. Die gekrümmten Pfeile stellen die Feldlinien des Magnetfelds dar. Der Strahlenweg ist für zwei verschiedene Fälle jeweils durch einen geraden Pfeil dargestellt, der die Feldlinien schneidet. Jeweils an einer Stelle der geraden Pfeile ist ein Winkel zwischen dem Pfeil und einer gestrichelte Linie eingezeichnet, die eine Tangente an die lokale Feldlinie ist.

Das Verhältnis $B_F$ zwischen der geomagnetischen Induktion B und der Gesamtelektronenzahl kann durch den Mittelwertsatz der Integralrechnung folgendermaßen ausgedrückt werden:

$$B_F = \frac{\int B \cos \Theta \cdot n_e \, ds}{TEC} \qquad \text{(Gl. 5)}$$

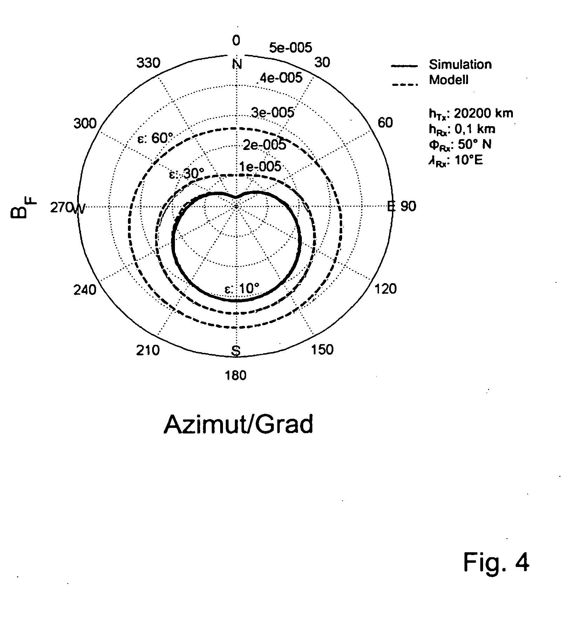

Hierin bedeuten: $n_e$ die Elektronendichte, ds das Strahlenweginkrement und $TEC = \int n_e \, ds$ die Gesamtelektronenzahl (Total Electron Content TEC) entlang des Strahlenweges. Das als Parameter des Korrekturmodells verwendete Verhältnis $B_F$ beschreibt die mittlere, auf den Strahlenweg bezogene Gewichtsfunktion des Magnetfeldes bei der Integration der Elektronendichte. Die Modellierung dieses Parameters liefert damit eine effektive Beschreibung des Magnetfeld-Einflusses. $B_F$ kann in einem anderen Anwendungsfall auch zur Berechnung des Faraday-Effektes an linear polarisierten VHF-Signalen verwendet werden. Da das Magnetfeld mit der Höhe stark abfällt ($1/r^3$), wobei r für die Höhe über der Planetenoberfläche steht, wird $B_F$ im Wesentlichen durch die Projektion der vertikalen Elektronendichteverteilung auf den Strahlenweg bestimmt. Die veränderlichen Eingangsgrößen einer Simulationsrechnung sind deshalb neben den physikalischen Eigenschaften (Verteilung und Dichte des Plasmas, Größe des Magnetfeldes) des ausgewählten Ortes der Elevationswinkel $\varepsilon$ und der Azimutwinkel $\alpha$ des Strahlenweges zwischen dem Sender der elektromagnetischen Welle (insbesondere dem GNSS- Satelliten) und dem Empfänger an der Planetenoberfläche. Das Ergebnis einer Berechnung z. B. für den geografischen Ort $\phi_{Rx}$=50°N (d. h. 50 Grad nördlicher Breite); $\lambda_{Rx}$=10°E (10 Grad östlicher Länge), $h_{Rx}$=100m (Höhe über Normal Null) und einer GNSS- Satellitenhöhe von 20200km (GPS-Höhe) zeigt Fig. 4. Das Verhältnis $B_F$ ist für diesen Ort als Funktion der Elevationswinkel $\varepsilon$ = 10°, 30° und 60° dargestellt.

Die Größe von $B_F$ ist in Fig. 4 gegeben durch den radialen Abstand vom Zentrum des Polardiagramms (T). Das Polardiagramm zeigt einen Vergleich des für den Korrekturalgorithmus erforderlichen Parameter $B_F$ (gestrichelt) im Vergleich mit den simulierten Daten (volle Linie). Die Berechnung erfolgt für einen GNSS Empfänger am Ort $\phi_{Rx}$=50°N und $\lambda_{Rx}$=10°E. Der Empfänger kann in der Simulation virtuell GNSS Signale aus allen Himmelsrichtungen (Azimuth) und bei allen Elevationen $\varepsilon$ des ankommenden Signals empfangen. Die Elevation ist hier für 10, 30 und 60 ° parametrisiert. Die Werte für $B_F$ sind als radialer Abstand vom Zentrum dargestellt. Das Diagramm zeigt eine deutliche Asymmetrie des magnetischen Korrekturparameters $B_F$ bzgl. der Himmelsrichtungen.

Um diese Abhängigkeit in geeigneter Weise zu modellieren, wird $B_F$ als Differenz zweier Kreisfunktionen mit den Radien $r_1$ und $r_2$ und den Mittelpunktkoordinaten $(0,-y_1)$ bzw. $(0,r_2)$ gebildet. Hierdurch können die Abweichungen von der Kreisfunktion sehr gut modelliert werden. Die Parameter $r_1$, $r_2$ und $Y_1$ werden durch Polynome n-ten Grades genähert (n wird entsprechend der geforderten Genauigkeit gewählt). Die Polynome lassen sich als Funktion des Elevationswinkels darstellen durch:

$$r_1(\varepsilon) = \sum_{i=0}^{n} a_i \cdot (\varepsilon)^i$$

$$r_2(\varepsilon) = \sum_{i=0}^{n} b_i \cdot (\varepsilon)^i$$

$$y_1(\varepsilon) = \sum_{i=0}^{n} c_i \cdot (\varepsilon)^i \qquad \text{(Gl. 6)}$$

Hierin sind $a_i$, $b_i$ and $c_i$ die Polynom-Koeffizienten und i der Laufindex der Summe mit i=0...n. Zur Darstellung der azimutalen Abhängigkeit wird für einen festen Elevationswinkel die Differenz der beiden Kreisgleichungen gebildet. Dementsprechend ist $B_F$ eine Funktion des Elevationswinkels ε und des Azimuts α:

$$B_F(\varepsilon,\alpha) = -y_1(\varepsilon)\cos\alpha + \sqrt{r_1^2(\varepsilon) - y_1^2(\varepsilon)\sin^2\alpha} - 2r_2(\varepsilon)\cos\alpha' \qquad \text{(Gl. 7)}$$

mit

$$\begin{cases} \alpha' = \pi/2 & \text{für} \quad \pi/2 < \alpha > 3\pi/2 \\ \alpha' = \alpha & \text{sonst} \end{cases}$$

Aus Gl. 6 und Gl. 7 erhält man:

$$B_F(\varepsilon,\alpha) = -\cos\alpha \cdot \sum_{i=0}^{n} c_i \cdot (\varepsilon)^i + \sqrt{\left\{\sum_{i=0}^{n} a_i \cdot (\varepsilon)^i\right\}^2 - \sin^2\alpha \cdot \left\{\sum_{i=0}^{n} c_i \cdot (\varepsilon)^i\right\}^2} - 2\cos\alpha' \cdot \sum_{i=0}^{n} b_i \cdot (\varepsilon)^i$$

$$\text{(Gl. 8)}$$

Dementsprechend ist $B_F(\varepsilon,\alpha)$ bei Kenntnis der Polynomkoeffizienten (Gl. 6) als Funktion der Elevations- und Azimut-Winkel ermittelbar. Die gestrichelten Kurven in Fig. 4 zeigen eine optimale Koeffizientenanpassung für $r_1$, $r_2$ und $y_1$ mit Polynomen 4. Grades.

Im Folgenden wird ein Anwendungsbeispiel für die Positionsbestimmung in dem GPS gegeben.

Der Entfernungsfehler 2. Ordnung $d_I^{(2)}$ ist gegeben durch

$$d_I^{(2)} = \frac{K_F}{f^3} \int B\cos\Theta \cdot n_\varepsilon ds \qquad \text{(Gl. 9)}$$

$$K_F = \frac{e^3}{16\pi^3 m_\varepsilon^2 \varepsilon_0} = K_F = 1.1281 \times 10^{12} \text{ m}^3\text{s}^{-1}\text{Akg}^{-1}$$

mit

$$e = 1.6021773 \times 10^{-19} \text{ As}$$

$$m_e = 9.109390 \times 10^{-31} \, \text{kg}$$

$$\varepsilon_0 = 8.854187817 \times 10^{-12} \, \text{As/Vm}$$

Kombiniert man Gl. 4 mit Gl. 9 erhält man:

$$d_I^{(2)} = \frac{K_F}{f^3} \cdot B_F(\varepsilon, \alpha) \cdot TEC \qquad \text{(Gl. 10)}$$

Um den Entfernungsfehler erster Ordnung $d_I^{(1)}$ mittels einer Zwei-Frequenz-Messung zu kompensieren, bildet man die so genannte $L_3$-Linearkombination der GPS-Trägerphasenmessungen auf den Frequenzen $f_1 = 1{,}575$ GHz und $f_2 = 1{,}228$ GHz

$$\Phi_3 = (1 + \beta_3) \, \Phi_1 - \beta_3 \, \Phi_2 \qquad \text{(Gl. 11)}$$

mit

$$\beta_3 = \frac{f_2^2}{f_1^2 - f_2^2} = 1.546 \qquad \text{(Gl. 12)}$$

Für den Zusammenhang der Phasenmessung mit der geradlinigen Entfernung $\rho$ und den verbleibenden Restfehlern höherer Ordnung ergibt sich unter Vernachlässigung weiterer, hier nicht relevanter Terme:

$$\Phi_3 = \rho + \Delta s_2 + \Delta s_x \qquad \text{(Gl. 13)}$$

worin $\Delta S_2$ den Restfehler 2. Ordnung und $\Delta s_x$ weitere Restfehler dritter und höherer Ordnung bezeichnen sollen.
Für den Restfehler 2. Ordnung ergibt sich:

$$\Delta s_2(\varepsilon, \alpha, TEC) = \frac{K_F}{f_1 f_2 (f_1 + f_2)} \cdot B_F(\varepsilon, \alpha) \cdot TEC \qquad \text{(Gl. 14)}$$

in Metern.
Wegen der Dispersivität der Ionosphäre (Frequenzabhängigkeit des Brechungsindex' n) ist die Ableitung der Gesamtelektronenzahl TEC aus Zwei-Frequenz-Messungen z. B. im GPS möglich. Für die Code-Phase $\Phi$ auf der Frequenz $f_1$ ergibt sich z.B.:

$$\Phi_1 = \rho + c(dt - dT) + d_{I1} + d_T + d_{MP_1} + dq_1 + dQ_1 + \varepsilon_1 \qquad \text{(Gl. 15)}$$

mit

$\rho$     Entfernung zwischen GPS- Satellit und Empfänger
$c$     Vakuum-Lichtgeschwindigkeit
$dt$     Uhrenfehler - Satellit
$dT$     Uhrenfehler - Empfänger
$d_f$     Ionosphärische Entfernungsfehler infolge Laufzeitverzögerung
$d_T$     Troposphärische Entfernungsfehler infolge Laufzeitverzögerung
$d_{MP}$     Fehler infolge Mehrwegeausbreitung
$d_q$     Instrumentelle Signallaufzeit im Satelliten
$dQ$     Instrumentelle Signallaufzeit im Empfänger
$\varepsilon$     Restfehler (Rauschen)

$$\Delta\Phi = K \frac{f_1^2 - f_2^2}{f_1^2 f_2^2} TEC + \Phi_{cal} \tag{Gl. 6}$$

Nach Bestimmen der Kalibrationskonstanten $\Phi_{cal}$ (z. B. beschrieben in: Sardon E., Zarraoa N., Estimation of total electron content using GPS data: How stable are the differential satellite and receiver instrument biases?, Radio Science, Vol. 5, pp. 1899-1910,1997) lässt sich TEC dann unmittelbar aus den GPS- Zweifrequenz- Phasenmessungen über $\Delta\Phi$ bis auf wenige $10^{16}$ Elektronen/m$^2$ genau bestimmen. Bleibt dieser Fehler unter $5\times10^{16}$ Elektronen/m$^2$, eine Forderung, die in der Regel erfüllt wird, liegt der aus diesem TEC-Fehler resultierende ionosphärische Positionierungsfehler zweiter und höherer Ordnung unter 1 mm.

Um für die Ausbreitungsfehlerkorrektur eine Näherungslösung für deutsche GNSS-Nutzer abzuleiten, wurde ein zentraler Referenzpunkt bei der geographischen Breite von $\phi_{Rx}$= 50° Nord und der geografischen Länge von $\lambda_{Rx}$ = 10° Ost gewählt. Der Korrekturparameter $B_F (\varepsilon, \alpha)$ wird dann mittels Gl. 8 mit Hilfe eines Polynoms vierter Ordnung angenähert.

$$B_F(\varepsilon,\alpha) = -\cos\alpha\cdot\sum_{i=0}^{4} c_i\cdot(\varepsilon)^i + \sqrt{\left\{\sum_{i=0}^{4} a_i\cdot(\varepsilon)^i\right\}^2 - \sin^2\alpha\cdot\left\{\sum_{i=0}^{4} c_i\cdot(\varepsilon)^i\right\}^2} - 2\cos\alpha\cdot\sum_{i=0}^{4} b_i\cdot(\varepsilon)^i$$

**(Gl. 15)**

Die optimal bestimmten Koeffizienten $a_i$, $b_i$ und $c_i$ sind für GNSS- Nutzer in Deutschland (50°N; 10°E) in Tabelle 1 zusammengefasst, worin "e-005" z. B. für "* $10^{-5}$" steht.

Tabelle 1: Polynomkoeffizienten $a_i$, $b_i$ und $c_i$.

| $i$ | 0 | 1 | 2 | 3 | 4 |
|---|---|---|---|---|---|
| $a_i$ | 1.9871e-005 | -8,2035e-008 | 1.2866e-008 | -1.6579e-010 | 6.2901e.013 |
| $b_i$ | 2.7995e-006 | 5.4497e-008 | -3.7836e-009 | 5.0049e-011 | -2.0707e-013 |
| $c_i$ | 1.1327e-005 | -5.3227e-010 | -4.0348e-010 | -2.1587e-011 | 1.1775e-013 |

Da sich die geomagnetisch-ionosphärischen Bedingungen in einem Gebiet wie Deutschland relativ geringfügig ändern, kann diese Korrektur prinzipiell auch für andere Orte genutzt werden.

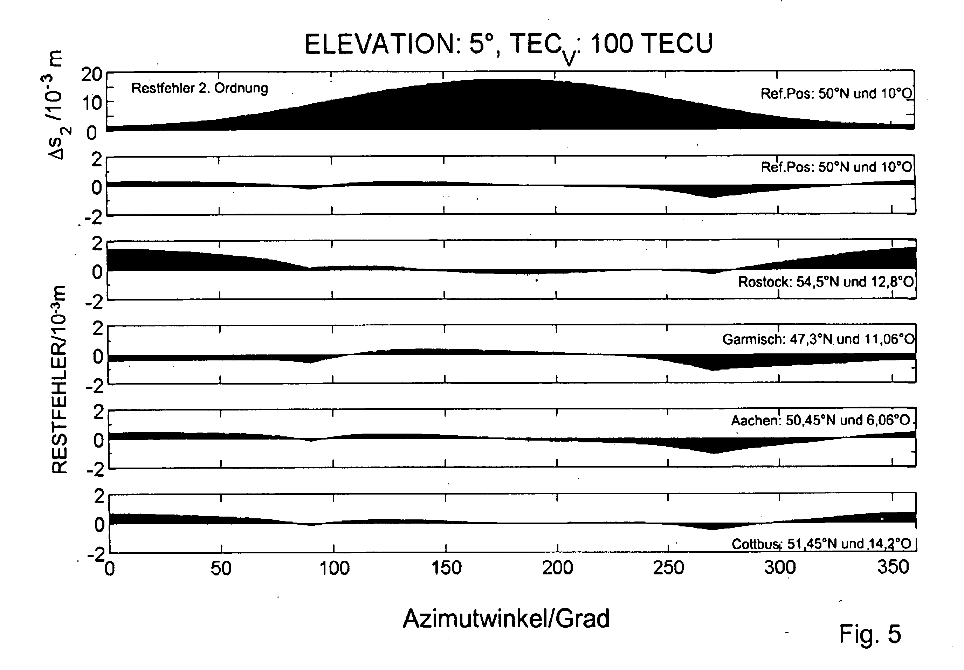

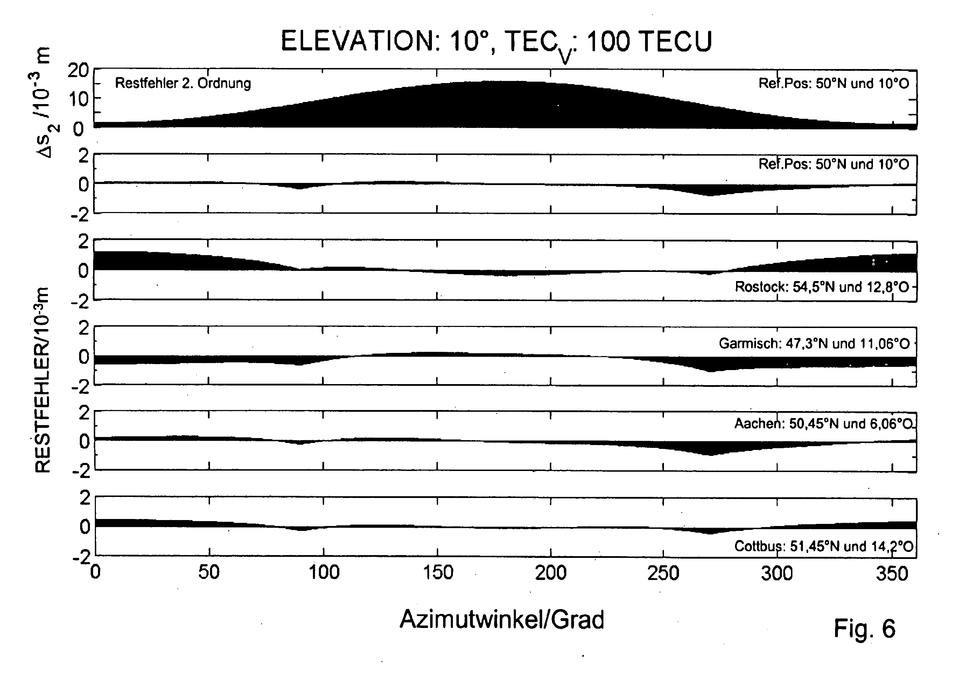

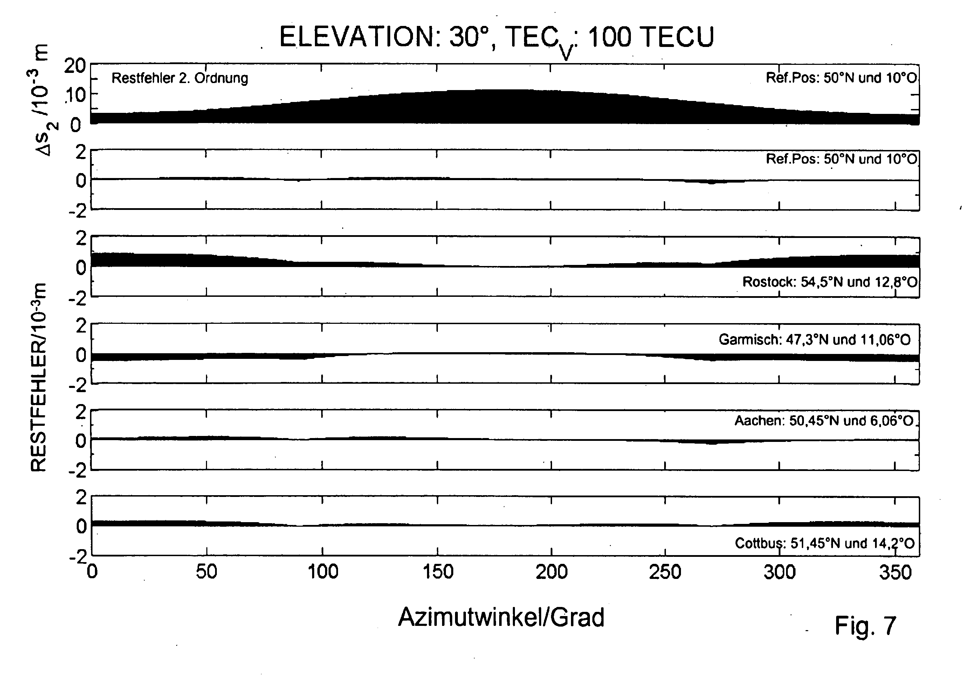

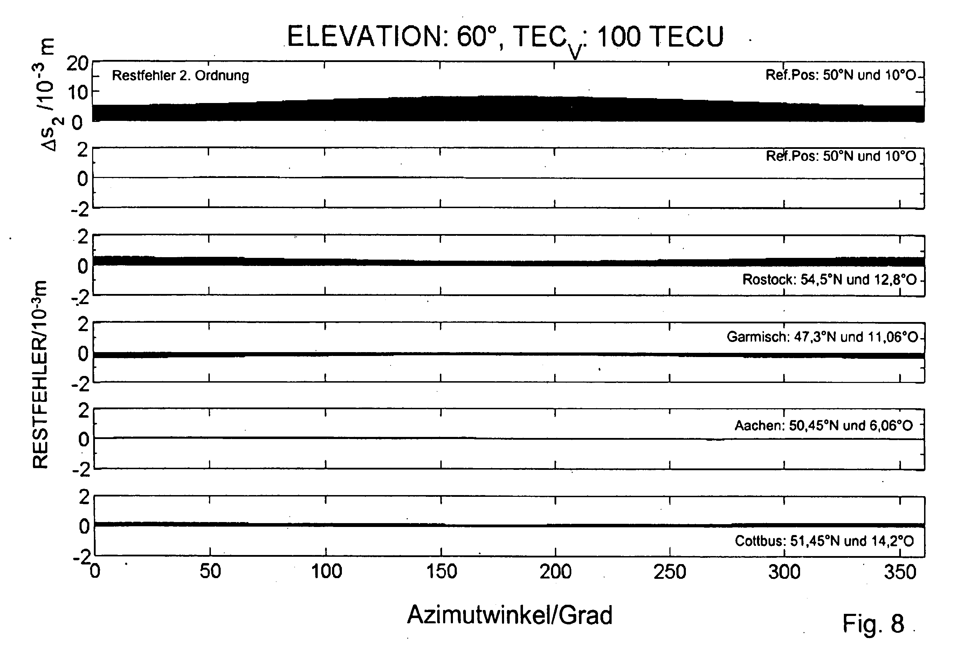

Die Genauigkeit der Korrektur ist bei einem angenommenen vertikalen TEC von 100 TECU (1 TECU= $10^{16}$ Elektronen /m$^2$) für folgende Orte überprüft worden: Rostock (im Norden von Deutschland), Garmisch (im Süden von Deutschland), Aachen (im Westen von Deutschland) und Cottbus (im Osten von Deutschland). Die verbleibenden Restfehler sind in Fig. 5 bis Fig. 8 als Funktion des Azimuts dargestellt. Dabei beträgt der Elevationswinkel $\varepsilon$ 5 Grad in Fig. 5, 10 Grad in Fig. 6, 30 Grad in Fig. 7 und 60 Grad in Fig. 8.

In jeder der Figuren 5 bis 8 sind sechs Teil-Diagramme untereinander angeordnet, wobei jedes Diagramm in horizontaler Richtung (x-Achse) von links nach rechts ansteigend den Azimutwinkel enthält. Im obersten Diagramm ist jeweils der Fehler zweiter Ordnung für den Referenzort in der Mitte Deutschlands dargestellt, im Diagramm darunter der Restfehler (3. und höherer Ordnung) für den Referenzort, im Diagramm darunter der Restfehler 2. Ordnung auf Grund der Abweichung vom Referenzort für Rostock, im Diagramm darunter der Restfehler 2. Ordnung auf Grund der Abweichung vom Referenzort für Garmisch, im Diagramm darunter der Restfehler 2. Ordnung auf Grund der Abweichung vom Referenzort für Aachen und im Diagramm darunter (d. h. in dem untersten Diagramm) der Restfehler 2. Ordnung auf Grund der Abweichung vom Referenzort für Cottbus. Die vertikale, d.h. y-Achse der Diagramme ist in Einheiten von 1 mm aufgetragen.

Es ist ersichtlich, dass der Ionosphärenfehler 2. Ordnung bei einem kleinen Elevationswinkel fast 20 mm betragen kann (oberstes Diagramm, z. B. in Fig. 5 und Fig. 6). Bemerkenswert ist seine eindeutige Richtungsabhängigkeit mit den größten Fehlern in südlicher Ausbreitungsrichtung (Azimutwinkel um 180 Grad), sodass systematische Messfehler resultieren können. Die durch das Modell nicht erfassten Restfehler liegen generell unter 2 mm (ca. 10 % des Gesamtfehlers 2. Ordnung).

Das Beispiel zeigt, dass die für einen bestimmten Ort durchgeführte Fehlerbestimmung genauer ist. Die Nutzung eines Vergleichsortes ist zumindest für das Gebiet von Deutschland jedoch ausreichend, wenn ein Restfehlers von kleiner als 2 mm ausreichend ist.

**Patentansprüche**

1. Verfahren zum Bestimmen eines Fehlers bei der Ausbreitung elektromagnetischer Wellen in einer Atmosphäre, die elektrisch geladene Teilchen aufweist, wobei

   - ein erstes Signal ausgewertet wird, wobei das erste Signal mittels einer ersten elektromagnetischen Welle durch die Atmosphäre übertragen wurde und wobei die erste elektromagnetische Welle eine erste Schwingungsfrequenz aufweist,
   - zumindest ein zweites Signal ausgewertet wird, wobei das zweite Signal mittels einer zweiten elektromagnetischen Welle durch die Atmosphäre übertragen wurde und wobei die zweite elektromagnetische Welle eine zweite Schwingungsfrequenz aufweist, die von der ersten Schwingungsfrequenz verschieden ist,
   - aus dem ersten Signal und aus dem zweiten Signal ein Maß für einen Inhalt und/oder eine Dichte der elektrisch geladenen Teilchen (Ladungsmaß) ermittelt wird,
   - das Ladungsmaß dazu verwendet wird, einen Term eines Ausbreitungsweges einer dritten elektromagnetischen Welle oder einen Term einer dem Ausbreitungsweg äquivalenten Größe zu bestimmen, wobei der Term außer von dem Ladungsmaß auch von der Schwingungsfrequenz und von einem magnetischen Korrekturparameter ($B_F$) zur Berücksichtigung des Einflusses eines Magnetfeldes des Planeten abhängt,
   - wobei der magnetische Korrekturparameter ($B_F$) als eine Funktion ausschließlich des Elevationswinkels ($\varepsilon$) und des Azimutwinkels ($\alpha$) des Strahlenweges von einem Sender (S1 - S4) der ersten und zweiten elektromagnetischen Welle zu einem Empfänger (54) an der Planetenoberfläche für die Korrektur verwendet wird, wobei der Korrekturparameter ($B_F$) für ein geografisches Gebiet des Planeten, in dem sich der Empfänger (54) befinden kann, in Abhängigkeit von dem Elevationswinkel ($\varepsilon$) und von dem Azimutwinkel ($\alpha$) mit Hilfe von für das geografische Gebiet ermittelten konstanten Polynom-Koeffizienten berechnet wird.

2. Verfahren nach dem vorhergehenden Anspruch, wobei die dritte elektromagnetische Welle die erste oder zweite elektromagnetische Welle ist.

3. Verfahren nach einem der vorhergehenden Ansprüche, wobei der Term von der dritten Potenz der Schwingungsfrequenz abhängt.

4. Verfahren nach einem der vorhergehenden Ansprüche, wobei der Term dazu verwendet wird, ein Ergebnis für den Ausbreitungsweg zu korrigieren.

5. Verfahren nach einem der vorhergehenden Ansprüche, wobei die Ausbreitung eines Signals, dessen Ausbreitungsweg bestimmt werden soll, durch eine Modellrechnung simuliert und als Ergebnis der Simulation der Ausbreitungswegfehler erhalten wird.

6. Verfahren nach dem vorhergehenden Anspruch, wobei das Ladungsmaß und/oder eine Information über ein Magnetfeld, das die Ausbreitung des ersten und/oder zweiten Signals beeinflusst, als Eingangsgröße der Modellrechnung verwendet werden/wird.

7. Verfahren nach dem vorhergehenden Anspruch, wobei die Eingangsgröße oder zumindest ein Teil der Eingangsgrößen von einer Einrichtung am Ort eines Empfängers ermittelt wird/werden, wobei der Empfänger die elektromagnetische Welle empfängt, für die der Ausbreitungsfehler bestimmt werden soll.

8. Verfahren nach einem der beiden vorhergehenden Ansprüche, wobei die Eingangsgröße oder zumindest ein Teil der Eingangsgrößen an einem Ort ermittelt wird/werden, der von dem Ort eines Empfängers, der die elektromagnetische Welle empfängt, entfernt ist.

9. Verfahren nach dem vorhergehenden Anspruch, wobei auch die Bestimmung des Terms und optional die Korrektur des Ausbreitungswegfehlers an einem Ort erfolgt/erfolgen, der von dem Ort eines Empfängers, der die elektromagnetische Welle empfängt, entfernt ist.

10. Verfahren nach einem der vorhergehenden Ansprüche, wobei der magnetische Korrekturparameter ($B_F$) für einen Referenzort auf der Planetenoberfläche ermittelt wird und der ermittelte Wert des magnetischen Korrekturparameters ($B_F$) für Empfänger innerhalb eines Gebietes auf der Oberfläche des Planeten zur Ermittlung des Terms verwendet wird.

11. Anordnung zum Bestimmen eines Fehlers bei der Ausbreitung elektromagnetischer Wellen in einer Atmosphäre, die elektrisch geladene Teilchen aufweist, wobei die Anordnung Folgendes aufweist:

- eine Auswertungseinrichtung (55), die ausgestaltet ist, ein erstes Signal auszuwerten, wobei das erste Signal mittels einer ersten elektromagnetischen Welle durch die Atmosphäre übertragen wurde und wobei die erste elektromagnetische Welle eine erste Schwingungsfrequenz aufweist,
- eine Auswertungseinrichtung (55), die ausgestaltet ist, ein zweites Signal auszuwerten, wobei das zweite Signal mittels einer zweiten elektromagnetischen Welle durch die Atmosphäre übertragen wurde und wobei die zweite elektromagnetische Welle eine zweite Schwingungsfrequenz aufweist, die von der ersten Schwingungsfrequenz verschieden ist,
- eine Ermittlungseinrichtung (56), die ausgestaltet ist, aus dem ersten Signal und aus dem zweiten Signal ein Maß für einen Inhalt und/oder eine Dichte der elektrisch geladenen Teilchen (Ladungsmaß) zu ermitteln,
- eine Fehler-Bestimmungseinrichtung (57), die ausgestaltet ist, unter Verwendung des Ladungsmaßes einen Term eines Ausbreitungsweges einer dritten elektromagnetischen Welle oder einen Term einer dem Ausbreitungsweg äquivalenten Größe (z. B. einer Ausbreitungszeit) zu bestimmen, wobei der Term außer von dem Ladungsmaß auch von der Schwingungsfrequenz und von einem magnetischen Korrekturparameter ($B_F$) zur Berücksichtigung des Einflusses eines Magnetfeldes des Planeten abhängt
- wobei der magnetische Korrekturparameter ($B_F$) als eine Funktion ausschließlich des Elevationswinkels ($\varepsilon$) und des Azimutwinkels ($\alpha$) des Strahlenweges von einem Sender (S1 - S4) der ersten und zweiten elektromagnetischen Welle zu einem Empfänger (54) an der Planetenoberfläche ermittelt wird, wobei der Korrekturparameter ($B_F$) für ein geografisches Gebiet des Planeten, in dem sich der Empfänger (54) befinden kann, in Abhängigkeit von dem Elevationswinkel ($\varepsilon$) und von dem Azimutwinkel ($\alpha$) mit Hilfe von für das geografische Gebiet ermittelten konstanten Polynom-Koeffizienten berechnet wird.

12. Anordnung nach dem vorhergehenden Anspruch, wobei die Fehler-Bestimmungseinrichtung am Ort der Auswertungseinrichtung bzw. der Auswertungseinrichtungen angeordnet ist.

13. Anordnung nach einem der beiden vorhergehenden Ansprüche, wobei die Ermittlungseinrichtung an einem anderen Ort als die Auswertungseinrichtung bzw. die Auswertungseinrichtungen angeordnet ist und über ein Computernetz und/oder ein Funknetz mit der oder den Auswertungseinrichtungen verbunden ist.

**Claims**

1. Method for determining an error during propagation of electromagnetic waves in an atmosphere which has electrically charged particles, wherein

- a first signal is evaluated, wherein the first signal was transferred through the atmosphere by using a first electromagnetic wave and wherein the first electromagnetic wave has a first oscillation frequency,
- at least a second signal is evaluated, wherein the second signal was transferred through the atmosphere by using a second electromagnetic wave and wherein the second electromagnetic wave has a second oscillation frequency that differs from the first oscillation frequency,
- a measure for the content and/or a density of the electrically charged particles (measure of charge) is determined from the first signal and from the second signal,

- the measure of charge is used to determine a term of a propagation path of a third electromagnetic wave or a term of a variable that is equivalent to the propagation path, wherein the term depends, other than on the measure of charge, also on the oscillation frequency and on a magnetic correction parameter ($B_F$) for considering the influence of a magnetic field of the planet,
- wherein the magnetic correction parameter ($B_F$) is used as a function solely of the elevation angle ($\varepsilon$) and the azimuth angle ($\alpha$) of the beam path from a transmitter (S1 - S4) of the first and second electromagnetic wave to a receiver (54) on the planet surface for the correction, wherein the correction parameter ($B_F$) is calculated for a geographical area of the planet in which the receiver (54) can be, depending on the elevation angle ($\varepsilon$) and on the azimuth angle ($a$) using constant polynom coefficients determined for the geographical area.

2. Method according to the preceding claim, wherein the third electromagnetic wave is the first or second electromagnetic wave.

3. Method according to any one of the preceding claims, wherein the term depends on the third potency of the oscillation frequency.

4. Method according to any one of the preceding claims, wherein the term is used to correct a result for the propagation path.

5. Method according to any one of the preceding claims, wherein the propagation of a signal, the propagation path of which is to be determined, is simulated by a model calculation and the propagation path error is obtained as a result of the simulation.

6. Method according to the preceding claim, wherein the measure of charge and/or a piece of information relating to a magnetic field, which influences the propagation of the first and/or second signal, is/are used as an input variable for the model calculation.

7. Method according to the preceding claim, wherein the input variable or at least a part of the input variables is determined by a facility at the location of a receiver, wherein the receiver receives the electromagnetic wave for which the propagation error is to be determined.

8. Method according to any one of the two preceding claims, wherein the input variable or at least a part of the input variables is determined at a location that is remote from the location of a receiver which receives the electromagnetic wave.

9. Method according to the preceding claim, wherein the determination of the term and, optionally, the correction of the propagation path error occurs at a location that is remote from the location of a receiver which receives the electromagnetic wave.

10. Method according to any one of the preceding claims, wherein the magnetic correction parameter ($B_F$) is determined for a reference location on the planet surface and the determined value of the magnetic correction parameter ($B_F$) is used for receivers within an area on the surface of the planet for determining the term.

11. Arrangement for determining an error during propagation of electromagnetic waves in an atmosphere which has electrically charged particles, wherein the arrangement comprises the following:

- an evaluation facility (55) designed to evaluate a first signal, wherein the first signal was transferred through the atmosphere by using a first electromagnetic wave and wherein the first electromagnetic wave has a first oscillation frequency,
- an evaluation facility (55) designed to evaluate a second signal, wherein the second signal was transferred through the atmosphere by using a second electromagnetic wave and wherein the second electromagnetic wave has a second oscillation frequency that differs from the first oscillation frequency,
- a determination facility (56) designed to determine, from the first signal and from the second signal, a measure for the content and/or a density of the electrically charged particles (measure of charge),
- an error determination facility (57) designed to determine, using the measure of charge, a term of a propagation path of a third electromagnetic wave or a term of a variable (e.g. propagation time) equivalent to the propagation path, wherein the term depends, other than on the measure of charge, also on the oscillation frequency and on a magnetic correction parameter (B$_F$) for considering the influence of a magnetic field of the planet
- wherein the magnetic correction parameter (B$_F$) is determined as a function solely of the elevation angle ($\varepsilon$) and the azimuth angle ($\alpha$) of the beam path from a transmitter (S1 - S4) of the first and second electromagnetic wave to a receiver (54) on the planet surface, wherein the correction parameter (B$_F$) is calculated for a geographical area of the planet in which the receiver (54) can be, depending on the elevation angle ($\varepsilon$) and on the azimuth angle ($\alpha$) using constant polynom coefficients determined for the geographical area.

12. Arrangement according to the preceding claim, wherein the error determination facility is arranged at the location of the evaluation facility or evaluation facilities.

13. Arrangement according to any one of the two preceding claims, wherein the determination facility is arranged at another location than the evaluation facility or evaluation facilities and connected to the evaluation facility or evaluation facilities via a computer network and/or a radio network.

## Revendications

1. Procédé de détermination d'une erreur lors de la propagation d'ondes électromagnétiques dans une atmosphère qui comporte des particules électriquement chargées, dans lequel

- un premier signal est évalué, le premier signal ayant été transmis dans l'atmosphère au moyen d'une première onde électromagnétique et la première onde électromagnétique présentant une première fréquence d'oscillation,
- au moins un deuxième signal est évalué, le deuxième signal ayant été transmis dans l'atmosphère au moyen d'une deuxième onde électromagnétique et la deuxième onde électromagnétique présentant une deuxième fréquence d'oscillation qui est différente de la première fréquence d'oscillation,
- une grandeur pour une contenance et/ou une densité des particules électriquement chargées (grandeur de charge) est déterminée d'après le premier signal et d'après le deuxième signal,
- la grandeur de charge est employée pour déterminer un terme d'un chemin de propagation d'une troisième onde électromagnétique ou un terme d'une grandeur équivalente au chemin de propagation, en plus de la grandeur de charge, le terme dépendant également de la fréquence d'oscillation et d'un paramètre de correction magnétique (B$_F$) afin de tenir compte de l'influence d'un champ magnétique de la planète,
- le paramètre de correction magnétique (B$_F$) étant employé pour la correction en tant que fonction exclusivement de l'angle d'élévation ($\varepsilon$) et de l'angle d'azimut ($\alpha$) de la trajectoire des rayons d'un émetteur (S1-S4) de la première et de la deuxième onde électromagnétique à un récepteur (54) à la surface de la planète, le paramètre de correction (B$_F$) étant calculé pour une région géographique de la planète, dans laquelle peut se trouver le récepteur (54), en fonction de l'angle d'élévation ($\varepsilon$) et de l'angle d'azimut ($\alpha$) à l'aide de coefficients polynomiaux constants déterminés pour la région géographique.

2. Procédé selon la revendication précédente, dans lequel la troisième onde électromagnétique est la première ou la deuxième onde électromagnétique.

3. Procédé selon l'une quelconque des revendications précédentes, dans lequel le terme dépend de la troisième puissance de la fréquence d'oscillation.

4. Procédé selon l'une quelconque des revendications précédentes, dans lequel le terme est employé pour corriger un résultat pour le chemin de propagation.

5. Procédé selon l'une quelconque des revendications précédentes, dans lequel la propagation d'un signal, dont le chemin de propagation doit être déterminé, est simulée par un calcul de modèle et le résultat obtenu par la simulation est l'erreur de chemin de propagation.

6. Procédé selon l'une quelconque des revendications précédentes, dans lequel la grandeur de charge et/ou une information sur un champ magnétique, qui influe sur la propagation du premier et/ou du deuxième signal, servent/ sert de grandeur d'entrée pour le calcul du modèle.

7. Procédé selon l'une quelconque des revendications précédentes, dans lequel la grandeur d'entrée ou au moins une partie des grandeurs d'entrée est/sont déterminée(s) par un dispositif sur le lieu d'un récepteur qui reçoit l'onde électromagnétique pour laquelle l'erreur de propagation doit être déterminée.

**8.** Procédé selon l'une des deux revendications précédentes, dans lequel la grandeur d'entrée ou au moins une partie des grandeurs d'entrée est/sont déterminée(s) en un lieu qui est distant du lieu d'un récepteur qui reçoit l'onde électromagnétique.

**9.** Procédé selon l'une quelconque des revendications précédentes, dans lequel la détermination du terme et, en option, la correction de l'erreur de chemin de propagation a/ont lieu en un lieu qui est distant d'un lieu d'un récepteur qui reçoit l'onde électromagnétique.

**10.** Procédé selon l'une quelconque des revendications précédentes, dans lequel le paramètre de correction magnétique ($B_F$) est déterminé pour une référence sur la surface de la planète et la valeur déterminée du paramètre de correction magnétique ($B_F$) est employée pour des récepteurs à l'intérieur d'une région à la surface de la planète en vue de la détermination du terme.

**11.** Agencement de détermination d'une erreur lors de la propagation d'ondes électromagnétiques dans une atmosphère, qui comporte des particules électriquement chargées, ledit système comportant :

- un dispositif d'évaluation (55) qui est agencé pour évaluer un premier signal, le premier signal ayant été transmis dans l'atmosphère au moyen d'une première onde électromagnétique et la première onde électromagnétique présentant une première fréquence d'oscillation,
- un dispositif d'évaluation (55) qui est agencé pour évaluer un deuxième signal, le deuxième signal ayant été transmis dans l'atmosphère au moyen d'une deuxième onde électromagnétique et la deuxième onde électromagnétique présentant une deuxième fréquence d'oscillation qui est différente de la première fréquence d'oscillation,
- un dispositif de détermination (56) qui est agencé pour déterminer une grandeur pour une contenance et/ou une densité des particules électriquement chargées (grandeur de charge) d'après le premier signal et d'après le deuxième signal,
- un dispositif de détermination d'erreur (57) qui est agencé pour déterminer à l'aide de la grandeur de charge un terme d'un chemin de propagation d'une troisième onde électromagnétique ou un terme d'une grandeur équivalente au chemin de propagation (par exemple un temps de propagation), en plus de la grandeur de charge, le terme dépendant également de la fréquence d'oscillation et d'un paramètre de correction magnétique ($B_F$) pour tenir compte de l'influence d'un champ magnétique de la planète,
- le paramètre de correction magnétique ($B_F$) étant déterminé en tant que fonction exclusivement de l'angle d'élévation ($\varepsilon$) et de l'angle d'azimut ($\alpha$) de la trajectoire des rayons d'un émetteur (S1-S4) des première et deuxième ondes électromagnétiques à un récepteur (54) à la surface de la planète, le paramètre de correction ($B_F$) étant calculé pour une région géographique de la planète, dans laquelle peut se trouver le récepteur (54), en fonction de l'angle d'élévation ($\varepsilon$) et de l'angle d'azimut ($\alpha$) à l'aide de coefficients polynomiaux constants déterminés pour la région géographique.

**12.** Agencement selon la revendication précédente, dans lequel le dispositif de détermination d'erreur est disposé sur le lieu du dispositif d'évaluation, respectivement des dispositifs d'évaluation.

**13.** Agencement selon l'une des deux revendications précédentes, dans lequel le dispositif de détermination est disposé en un autre lieu que le dispositif d'évaluation, respectivement les dispositifs d'évaluation, et est relié avec le ou les dispositifs d'évaluation par un réseau informatique et/ou un réseau de radiocommunication.

Fig. 1

Fig. 2

EP 1 843 166 B1

Fig. 3

19

Azimut/Grad

Fig. 4

ELEVATION: 5°, TEC$_V$: 100 TECU

$\Delta s_2 / 10^{-3}$ m

Restfehler 2. Ordnung

Ref.Pos: 50°N und 10°O

Ref.Pos: 50°N und 10°O

Rostock: 54,5°N und 12,8°O

Garmisch: 47,3°N und 11,06°O

Aachen: 50,45°N und 6,06°O

Cottbus: 51,45°N und 14,2°O

RESTFEHLER/$10^{-3}$m

Azimutwinkel/Grad

Fig. 5

EP 1 843 166 B1

ELEVATION: 10°, $TEC_V$: 100 TECU

Fig. 6

Azimutwinkel/Grad

$\Delta s_2$ /$10^{-3}$ m

RESTFEHLER/$10^{-3}$m

Restfehler 2. Ordnung

Ref.Pos: 50°N und 10°O

Ref.Pos: 50°N und 10°O

Rostock: 54,5°N und 12,8°O

Garmisch: 47,3°N und 11,06°O

Aachen: 50,45°N und 6,06°O

Cottbus: 51,45°N und 14,2°O

EP 1 843 166 B1

## ELEVATION: 30°, $TEC_V$: 100 TECU

Fig. 7

Azimutwinkel/Grad

EP 1 843 166 B1

**ELEVATION: 60°, TEC$_V$: 100 TECU**

Restfehler 2. Ordnung

Ref.Pos: 50°N und 10°O

Ref.Pos: 50°N und 10°O

Rostock: 54,5°N und 12,8°O

Garmisch: 47,3°N und 11,06°O

Aachen: 50,45°N und 6,06°O

Cottbus: 51,45°N und 14,2°O

$\Delta s_2 / 10^{-3}$ m

RESTFEHLER/$10^{-3}$m

Azimutwinkel/Grad

Fig. 8

EP 1 843 166 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BASSIERI S. et al.** Higher-order ionospheric effects on the Global Positioning System observables and means of modeling them. *Manuscripta Geodaetica,* 1993, vol. 18 (5), ISSN 0340-8825, 280-289
- **FRAILE-ORDONEZ J.** Real-time TEC determination for ionospheric modeling in WADGPS. *Proceedings of the institute of Navigation (ION) GPS,* 1995, vol. 2, 1193-1197
- mit Hilfe von Chapman-Profilen, wie in der folgenden Veröffentlichung angegeben. **DAVIES, K.** Ionospheric Radio. Peter Peregrinus Ltd, 1990
- **MANDEA M. ; MACMILLAN S.** International Geomagnetic Reference Field-the eighth generation. *Earth Planets Space,* 2000, vol. 52, 1119-1124
- **SARDON E. ; ZARRAOA N.** Estimation of total electron content using GPS data: How stable are the differential satellite and receiver instrument biases?. *Radio Science,* 1997, vol. 5, 1899-1910